# EUROPEAN PATENT SPECIFICATION

(11) **EP 4 232 794 B1**
(45) Date of publication and mention of the grant of the patent: **06.08.2025**
(21) Application number: 21806375.8
(22) Date of filing: 21.10.2021
(51) Int. Cl.: G01N 1/30

(54) **COMPOSITION FOR THE TREATMENT OF BIOLOGICAL, CYTOLOGICAL, HISTOLOGICAL AND AUTOPSICAL SAMPLES**
ZUSAMMENSETZUNG FÜR DIE BEHANDLUNG VON BIOLOGISCHEN, ZYTOLOGISCHEN, HISTOLOGISCHEN UND AUTOPSISCHEN PROBEN
COMPOSITION POUR LE TRAITEMENT D'ÉCHANTILLONS BIOLOGIQUES, CYTOLOGIQUES, HISTOLOGIQUES ET AUTOPSIQUES

(30) Priority: 23.10.2020 IT 202000025159; 16.12.2020 IT 202000031031
(43) Date of publication of application: 30.08.2023
(73) Proprietor: Diapath S.p.A., 24057 Martinengo (BG) (IT)
(72) Inventor: LUPO, Carmelo, 24057 Martinengo (BG) (IT); BATTISTEL, Alberto, 24057 Martinengo (BG) (IT); DANZI, Paolo, 24057 Martinengo (BG) (IT); CASATTA, Nadia, 24057 Martinengo (BG) (IT); MELONE, Federica, 24057 Martinengo (BG) (IT); GAFFORELLI, Daria, 24057 Martinengo (BG) (IT); BUSSI, Ottaviano, 24057 Martinengo (BG) (IT); MANENTI, Giorgio, 24057 Martinengo (BG) (IT); BERGAMINI, Vladimiro, 24057 Martinengo (BG) (IT)
(74) Representative: Trupiano, Federica
(86) International application number: PCT/IB2021/059713
(87) International publication number: WO 2022/084907

(56) References cited:
- WO-A2-2013/144986
- US-A- 6 042 874
- US-A1- 2012 202 241

## Description

### Summary of the Invention

The present invention relates to a composition for treating biological, cytological, histological and autopsical samples, in particular to a composition capable of merging reagents for the dehydration, clarification and paraffin infiltration treatments of the sample, and to its use in the preparation of samples for analysis.

### Background art

The anatomo-pathological diagnosis is the result of the interpretation by the anatomo-pathologist of the morphological, macroscopic and microscopic characteristics of the biological sample under examination.

To provide an accurate and complete diagnosis, the sample excised from the patient must undergo a series of treatments with the purpose of ensuring its preservation over time. Such treatments essentially provide for:
i. fixation;
ii. dehydration;
iii. clarification; and
iv. paraffin infiltration.

The first stage of such processes consists in the fixation of the sample in a 10% buffered neutral formalin solution, which is able to minimize the degradation phenomena caused by the removal of the tissue from its vital environment and by the possible presence of microorganisms.

After the fixation, the sample is usually dehydrated by several successive steps with ethanol solutions of increasing concentration, up to 99% ethanol and subsequently clarified with xylene. The purpose of these steps is to remove water from the sample to allow its subsequent infiltration in paraffin, which is a hydrophobic substance.

The final paraffin infiltration is necessary to make the sample solid enough to be cut into micrometer sections, to be subsequently stained and analyzed.

The purpose of the various steps of the dehydration treatment (with ethanol solutions) is to replace the water inside the tissue with solutions of increasing hydrophobicity to make possible the penetration of paraffin, which is a completely hydrophobic substance. Generally, after the formalin fixation, a dehydration and clarification treatment protocol provides for subjecting the sample to the following steps:
- treatment with 70% alcohol;
- treatment with 90% alcohol;
- treatment with 99% alcohol (three times); and
- clarifying treatment with xylene (three times).

After the clarification step with xylene, which is able to remove the alcohol and to clearly increase the compatibility with paraffin, in terms of hydrophobicity, the tissue is infiltrated, usually by three consecutive baths of melted paraffin at a temperature of about 60°C. The triple step allows to obtain an infiltrated tissue free of xylene, which is released from the sample especially in the first paraffin bath.

After the paraffin infiltration, the sample can be included in a paraffin block and cut in a microtome.

The commercially available paraffins are mixtures of mostly linear hydrocarbons with a number of carbon atoms of C20-C55. Two categories can be distinguished in relation to the purpose of use: paraffin for infiltration and paraffin for inclusion.

The paraffin used for the tissue infiltration, i.e., in the last treatment set forth above, may be a paraffin with a lower melting point than the paraffin used for the block inclusion (52-54°C vs. 56-58°C), since it is constituted by hydrocarbon chains with a lower number of carbon atoms. This characteristic imparts lower viscosity to the product and therefore a greater speed of penetration inside the tissue. There are currently infiltration paraffins on the market that differ in the length of the hydrocarbon chains or in the presence of small percentages of additional waxes (such as microcrystalline paraffin or beeswax) that reduce the size of the crystals that form during cooling. In recent years in some formulations a percentage around 2% dimethyl sulfoxide (DMSO) has been added to further increase the efficiency of penetration into the tissue, the DMSO, in fact, is widely used as a solvent in toxicology and pharmacology, to increase the penetration of active ingredients into the cell membranes.

The treatments (ii), (iii) and (iv) above require considerable time and energy, as well as the use of large quantities of solvents.

In fact, a common protocol provides for the use of 4-5 liters of solvent for each single step. Note that for the following processing:
- treatment with 70% alcohol (dehydration);
- treatment with 90% alcohol (dehydration);
- treatment with 99% alcohol (three times) (dehydration);
- clarifying treatment with xylene (three times); and
- paraffin infiltration treatment (three times);
a total of about 40-45 liters of solvents (alcohol and xylene) are used about every 1000 samples, in addition to the paraffin used for the infiltration, in a process that takes about 14 hours.

WO03/100384, EP822403 and WO2013/144986 describe compositions that allow the dehydration and clarification steps to be carried out simultaneously. However, the processing of the samples with said compositions is time-consuming and subsequently the sample must undergo a paraffin infiltration step. In addition, EP822403 requires the use of microwaves to carry out the treatment, as well as high temperatures and pressures. Such conditions can damage the samples to be examined.

US2012/202241 generally describes a process for treating biological samples in three steps: a first step of saturating with a solvent composition comprising at least one ketone (preferably acetone) and hexanes or xylene as an alternative to hexanes, a second step of infiltrating with hot paraffin, and a final step of vaporizing the solvent composition. Also described among the solvent compositions are compositions that contain small percentages of paraffin (2% or 6%) and a solvent composition that is constituted by 17% acetone, 39% of at least one hexane, 5% DMSO, 12% isopropanol, and 30% paraffin (percentages by weight). US2012/202241 describes the use of ketones, particularly acetone, as being fundamental to the process.

As it is well known to the person skilled in the art, acetone is not recommended by the major manufacturers of automatic processors due to incompatibility with the components of the instrument itself, see for example "Thermo Scientific Excelsior AS Guida dell'operatore A82310100 Issue 6 - copyright 2013 Thermo Fisher Scientific, page 191 Reagenti approvati"; (https://tools.thermofisher.com/content/sfs/manuals/A82310100_06IT%20-%200p%20Guide%20Italian.pdf) or also "HistoCore PELORIS 3 Manuale utente - copyright 2020 Leica Biosystem, page 97 Reagenti sconsigliati" (https://drp8p5tqcb2p5.cloudfront.net/fileadmin/downloads_lbs/HistoCore_PELORI S_3/IFU/HistoCore_PELORIS_3_User-Manual_-_IT.pdt).

In addition to the use of acetone which, as stated, is incompatible with most processors, the composition described in US2012/202241 provides for a 30% maximum percentage of paraffin, which quantity does not allow to obtain a solid composition at room temperature.

There is a need to provide novel innovative reagents that are compatible with automated processors, easy to store and transport, and which allow saving time and solvents, thus making the treatment of samples to be analyzed faster, cheaper and more environmentally sustainable.

### Objects of the invention

An object of the of the invention is to provide a composition for preparing biological, cytological, histological and autopsical samples for the analysis thereof, which reduces the time and cost of the treatments of said samples and requires the use of few steps and reagents.

Another object of the invention is to provide the use of said composition for preparing biological, cytological, histological and autopsical samples for the analysis thereof, and a method for preparing said samples.

A further object is to provide a composition as a single reagent for performing the simultaneous dehydration, clarification and infiltration of biological, cytological, histological and autopsical samples, which is compatible with the automated processors and does not contain any ketones.

A further object is to provide a composition as a single reagent for performing simultaneous dehydration, clarification and infiltration of biological, cytological, histological and autopsical samples, which is solid at ambient pressure and temperature and is therefore easy to handle, store and transport.

Finally, a further object of the invention is to provide methods and processes which use said composition.

### Brief description of the Figures

Figure 1 shows samples treated according to Example 1 of the invention.
Figure 2 shows a comparison between a composition of the invention, on the left, and the composition of EP802403, on the right (Example 14).

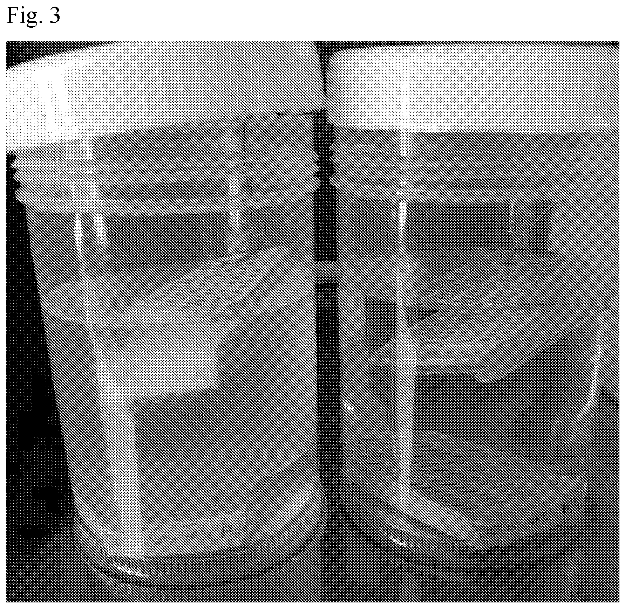

Figure 3 shows the processing of samples in the two phases (upper and lower) of the composition of EP802403 (Example 14).
Figure 4 shows on the left a sample processed in the lower phase of the composition of EP802403 and on the right the sample processed in the upper phase (Example 14).
Figure 5 shows the sample from Figure 4, on the left, 2 and 7 days after the inclusion (Example 14). The sample is immediately not homogeneously infiltrated in paraffin, so that after only one week from the inclusion it comes out from its position in the block.
Figure 6 shows a lung sample processed according to the invention, on the left, and according to EP802403, on the right, after standard staining with hematoxylin/eosin (Example 14).
Figure 7 shows a liver sample processed according to the invention, on the left, and according to EP802403, on the right, after standard staining with hematoxylin/eosin (Example 14).
Figure 8 shows samples treated according to Example 7 and Example 8 of the invention, in particular on the left two samples treated with a limonene-containing composition, on the right two samples treated with an isoparaffin-containing composition.
Figure 9 shows a lung sample processed according to the invention with a composition containing isoparaffin, on the left, and according to EP802403, on the right, after standard staining with hematoxylin/eosin (Example 14).
Figure 10 shows a liver sample processed according to the invention with a composition containing isoparaffin, on the left, and according to EP802403, on the right, after standard staining with hematoxylin/eosin (Example 14).

### Description of the invention

The subject-matter of the invention, according to an aspect thereof, is the use of a composition comprising paraffin, at least one alcohol and at least one hydrocarbon selected from naphtha, octane, isoparaffin or limonene, for the preparation of biological, cytological, histological and autopsical samples for the analysis thereof.

According to the present invention, the composition used does not contain any ketones.

More particularly, the subject-matter of the invention is the use of said composition as a reagent for the simultaneous performing of the treatments of dehydration, clarification and infiltration in paraffin, in a single step.

By "paraffin" herein is meant paraffin for analysis, preferably for histological analysis, preferably having a melting point of 56-58°C.

According to the invention, the at least one alcohol is selected from C1-C4, linear or branched alcohols, which are preferably selected from ethyl alcohol and isopropyl alcohol. According to a preferred embodiment, the composition comprises a mixture of ethyl alcohol and isopropyl alcohol, more preferably a mixture of isopropyl alcohol/ethyl alcohol in a volume ratio ranging from 2-4/1 to 1/2-4 respectively, advantageously of about 3/1 or 1/3.

By "naphtha" herein is meant to denote a hydrocarbon mixture derived from a petroleum fraction free of aromatic hydrocarbons and predominantly composed of molecules having 4 to 11, mainly 7 to 9, carbon atoms. According to a preferred embodiment, the naphtha is "Naphtha hydrotreated light" having the Chemical Abstracts number 64742-49-0.

According to a preferred embodiment, the at least one hydrocarbon is naphtha as defined above.

By "isoparaffin" is meant herein to denote a mixture of aliphatic hydrocarbons, substantially free of aromatic hydrocarbons (usually less than 2%) with a melting point below 60°C and predominantly composed of molecules having 9 to 28 carbon atoms, predominantly 11 to 15 carbon atoms. According to a preferred embodiment, the isoparaffin of the composition of the invention has the Chemical Abstracts number 90622-58-5.

According to a preferred embodiment, the at least one hydrocarbon is isoparaffin as defined above.

Isoparaffin is a particularly advantageous hydrocarbon since, in addition to providing excellent results in the composition of the invention for the treatment of the samples, it allows obtaining a final formulation which is safer and less polluting than the solutions commonly used in pathological anatomy for the processing of the biological samples; in fact, neither the GHS08 symbol nor the GHS09 symbol, according to the GHS (Globally Harmonised System) labeling, are attributed to the final formulation.

By "limonene" is meant herein to denote 4-isopropenyl-1-methyl-1-cyclohexene, racemic or in the form of one of its isomers or even non-racemic mixtures thereof, preferably the (R) isomer of 4-isopropenyl-1-methyl-1-cyclohexene.

Unless otherwise specified, all percentages and ratios described herein described are expressed in volume.

According to an embodiment, the composition may also comprise 2,2-dimethoxypropane.

The subject-matter of the present invention, according to another aspect thereof, is a composition comprising, or alternatively consisting of, paraffin, at least one alcohol, at least one hydrocarbon, as defined above, and possibly 2,2-dimethoxypropane.

According to a preferred embodiment, the composition of the invention comprises, or alternatively consists of:
- paraffin (as defined above): 40-60%, preferably about 50%;
- ethyl alcohol + isopropyl alcohol: 15-25%, preferably about 20%;
- at least one hydrocarbon (as defined above): 25-40%, preferably about 30%, said hydrocarbon being selected from naphtha, octane, isoparaffin and limonene; and
- possibly one or more further components, at the rate of 0-15%, preferably 0-5%;
said % being expressed in volume with respect to the total volume of the composition.

According to another preferred embodiment, the composition of the invention comprises, or alternatively consists of:
- paraffin (as defined above): 40-60%, preferably about 50%;
- ethyl alcohol: 15-25%, preferably about 20%;
- at least one hydrocarbon (as defined above): 25-40%, preferably about 30%, said hydrocarbon being selected from naphtha, octane, isoparaffin and limonene; and
- possibly one or more further components, at the rate of 0-15%, preferably 0-5%;
said % being expressed in volume with respect to the total volume of the composition.

According to another preferred embodiment, the composition of the invention comprises, or alternatively consists of:
- paraffin (as defined above): about 50%;
- ethyl alcohol: about 20%;
- isoparaffin: about 30%; and
- possibly one or more further components, at the rate of 0-15%, preferably 0-5%;
said % being expressed in volume with respect to the total volume of the composition.

The above mentioned preferred embodiments also apply to the composition of the invention.

According to a preferred embodiment, in the composition of the invention, said at least one hydrocarbon comprises isoparaffin.

According to a preferred embodiment, the composition of the invention does not comprise any ketone, for example does not comprise acetone.

According to a preferred embodiment, the composition of the invention comprises or alternatively consists of 50% paraffin, 5% ethyl alcohol, 15% isopropyl alcohol and 30% isoparaffin.

According to a preferred embodiment, the composition of the invention comprises, or alternatively consists of 50% paraffin, 20% ethyl alcohol and 30% isoparaffin.

According to a preferred embodiment, the composition of the invention comprises, or alternatively consists of 43-50%, preferably about 45-50% paraffin, 15% ethyl alcohol, 5% isopropyl alcohol, 30% at least one hydrocarbon as defined above, preferably comprising or consisting of isoparaffin and possibly one or more further components at the rate of 0-15%, preferably 0-5%.

As stated, the composition of the invention is substantially comprised of the above mentioned components. However, small amounts of additional components may be present. By way of example, when present, 2,2-dimethoxypropane is added to the composition in an amount of 1-15% by volume, with respect to the total volume of the composition. It is also possible, and preferred, to add a catalytic amount of concentrated hydrochloric acid (37% HCl) at a rate of 1/1000 v/v with respect to the volume of dimethoxypropane.

All the components of the composition are known and commercially available.

The composition of the invention may be prepared according to any suitable method.

By way of example, you may operate as follows: the solid paraffin is transferred into a jerrycan of suitable volume, to which heat is supplied by means of heating band or other heating system. The paraffin is left at the temperature of 60-65°C until a homogeneous liquid solution is obtained. The liquid components are then added to the jerrycan in no particular order. The jerrycan used is a closed system, it is equipped with a main hole with hermetic closure for the introduction of the paraffin and a septum with a non-return valve for the introduction of the liquid ingredients. The jerrycan is also equipped with a reflux condenser, which has the task of condensing the vapors of the low-boiling ingredients, making them fall as liquid drops inside the jerrycan itself (the reflux system is necessary to avoid overpressure inside the jerrycan and the loss of solvent in the form of vapor, thus affecting its composition). After adding the liquid components, the mixture is left under stirring at the temperature of 60-65°C for the time necessary to make the (liquid) solution homogeneous; it is then packed, still hot, into containers of various shapes or volumes, in which it cools.

The composition of the invention is a white solid at room temperature and pressure. This characteristic thereof also makes the composition of the invention manageable, transportable and storable at least as well as the various reagents required for the dehydration and clarification, which are all constituted by liquid solvents. A further important advantage is the respect of the operator's health, for whom the risks of spillage are drastically reduced and there is no need to move the reagents from the jerrycans containing the liquid reagents.

The advantages of the composition of the invention over the known compositions, for example over the compositions described in US2012/202241 are obvious. By way of example, but not only, the composition of the invention has the advantage of comprising components that are all compatible with the commercial processors and is therefore concretely usable contrary to that described in US2012/202241, and is robust to the ambient pressure and temperature which allows its easy transport and storage.

For its use, the composition is brought to the liquid state by simple heating, for example at about 60°C. The samples are then treated according to the invention, where "treating" means soaking the sample in the composition, preferably for about 1-3 hours.

The composition of the invention is also very versatile and is suitable for processing in various ways. In fact, the composition of the invention is capable of processing the samples in both static and dynamic modes (solution agitation, perfusion, etc.).

It is possible to repeat the bath if necessary.

As stated, the composition described herein allows to simultaneously perform the dehydration, clarification and paraffin infiltration treatments, therefore incorporating in a single process the treatments (ii), (iii) and (iv) which conventionally involve several passages in solvents and in paraffin, as explained in the "Background of the invention".

In fact, surprisingly, the formulation of the invention allows to process the samples by simultaneously carrying out all the "traditional" steps of dehydration, clarification and paraffin infiltration, with a single step. More particularly, unlike the known formulations set forth above, it is not even necessary to perform the paraffin infiltration steps separately. According to the invention, the sample therefore carry out a single step in the formulation of the invention, for a time between 1 and 3 hours depending on the size of the sample, at ambient pressure and at the temperature of about 60-65°C.

In practice, after an optional first washing of the sample previously fixed with formalin, with hydroalcoholic solution (50% or 70%), the composition of the invention dehydrates, clarifies and infiltrates the sample in a single step followed by an optional drying step before the inclusion in paraffin block.

At the end of said step, the sample is well dehydrated and infiltrated, ready to continue the standard routine of the histological diagnosis (inclusion in paraffin block, cutting of sections with microtome, staining of the sections, mounting, microscopic analysis).

Thus, the composition of the invention allows obtaining properly processed samples in only 3 hours, with significant savings in solvents and reagents.

Subject-matter of the invention, according to another aspect thereof, is the use of the composition of the invention as reagent for performing the dehydration, clarification and paraffin infiltration of the samples as defined herein, in a single treatment.

Subject-matter of the invention, according to another aspect thereof, is a method for treating biological, cytological, histological and autopsical samples, in particular for the dehydration, clarification and paraffin infiltration treatments, comprising the use of a composition as described herein.

Subject-matter of the invention, according to another aspect thereof, is a method for treating biological, cytological, histological and autopsical samples, in particular for the dehydration, clarification and paraffin infiltration treatments, which comprises treating said samples with a composition as described herein.

Subject-matter of the invention, according to another aspect thereof, is a biological, cytological, histological and autopsical sample treated with a composition according to a composition of the invention.

Subject-matter of the invention, according to another aspect thereof, is a process for treating biological, cytological, histological and autopsical samples previously subjected to fixation with formalin, in particular for the treatments of dehydration, clarification and paraffin infiltration, comprising:
1. heating the composition of the invention to about 60-65°C;
2. treating said samples with a composition according to the invention.

The following Table shows the comparison between the treatment of the samples according to the methods and with the known compositions and the treatment with the method and composition of the invention:

| Treatment | Method | Characteristics |
|---|---|---|
| Conventional Treatment | 3 steps: | about 8 steps of the sample in the different solvents; |
| | dehydration with alcohols; | |
| | | 40-45 liters of solvents (alcohol and xylene) approximately every 1000 samples; |
| | clarification with xylene; | |
| | paraffin infiltration | 3 steps of the sample in paraffin. |
| Treatment according to WO03/100384 | 2 steps: | separate infiltration step; |
| | dehydration and clarification together; | long times (up to 9 hours); |
| WO2013/144986 | | multiple steps of the sample for each step. |
| | paraffin infiltration. | |
| Treatment according to EP822403 | 2 steps: | separate infiltration step; |
| | dehydration and clarification together; | long time; |
| | | multiple steps of the sample for each step, |
| | paraffin infiltration. | |
| | | high temperatures 70-90°C; |
| | | high pressure 300-500 mbars; |
| | | microwave treatment. |
| Treatment of the Invention | 1 single step for dehydration, | 1 single step of the sample; |
| | | reduced volumes of reagents and solvents; |
| | clarification and paraffin infiltration | |
| | | reduced the overall number of plastic containers for a lower environmental impact (less CO₂) |
| | | short time (1-3 hours). |

It is immediately apparent from the above Table that the treatment using the composition of the invention involves a number of advantages in terms of time, energy, solvents and thus allows for a more environmentally friendly treatment of the samples.

The invention will now be described by means of the following examples, which are set forth herein for illustrative purposes only and in no way limiting.

### Experimental Section

### Example 1

### Composition according to the invention

A composition is prepared, consisting of (% by volume):
50% paraffin
5% ethyl alcohol
15% isopropyl alcohol and
30% naphtha.

### Example 2

### Composition according to the invention

A composition is prepared, consisting of (% by volume):
50% paraffin
5% ethyl alcohol
15% isopropyl alcohol and
30% octane.

### Example 3

### Composition according to the invention

A composition is prepared, consisting of (% by volume):
40% paraffin
5% ethyl alcohol
15% isopropyl alcohol and
40% octane or naphtha.

### Example 4

### Composition according to the invention

A composition is prepared, consisting of (% by volume):
50% paraffin
15% ethyl alcohol
5% isopropyl alcohol and
30% octane.

### Example 5

### Composition according to the invention

A composition is prepared, consisting of (% by volume):
44.995% paraffin
15% ethyl alcohol
5% isopropyl alcohol
30% octane or naphtha
5% 2,2-dimethoxypropane and
0.005% concentrated HCl (37% HCl).

### Example 6

### Treatment of kidney and liver samples

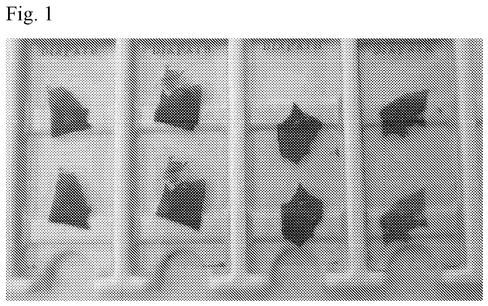

The samples to be tested measuring 1.5 x 1.5 cm (2 mm thick) are placed in a bath in the composition of Example 1, for a time of 2 hours at room pressure at the temperature of 60-65°C. Figure 1 shows the result of the treatment after inclusion, cutting and standard staining with hematoxylin/eosin.

### Example 7

### Composition according to the invention

A composition is prepared, consisting of (% by volume):
50% paraffin
5% ethyl alcohol
15% isopropyl alcohol and
30% isoparaffin.

### Example 8

### Composition according to the invention

A composition is prepared, consisting of (% by volume):
50% paraffin
5% ethyl alcohol
15% isopropyl alcohol and
30% limonene.

### Example 9

### Composition according to the invention

A composition is prepared, consisting of (% by volume):
40% paraffin
5% ethyl alcohol
15% isopropyl alcohol and
40% limonene or isoparaffin.

### Example 10

### Composition according to the invention

A composition is prepared, consisting of (% by volume):
50% paraffin
15% ethyl alcohol
5% isopropyl alcohol and
30% limonene.

### Example 11

### Composition according to the invention

A composition is prepared, consisting of (% by volume):
44.995% paraffin
15% ethyl alcohol
5% isopropyl alcohol
30% limonene or isoparaffin
5% 2,2-dimethoxypropane and
0.005% concentrated HCl (37% HCl).

### Example 12

### Composition according to the invention

A composition is prepared, consisting of (% by volume):
50% paraffin
20% ethyl alcohol and
30% isoparaffin.

### Example 13

### Treatment of kidney and liver samples

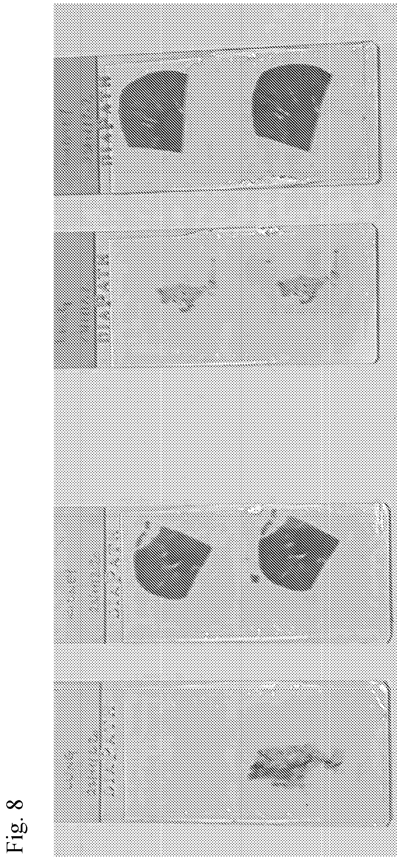

The samples to be tested measuring 1.5 x 1.5 cm (2 mm thick) are placed in a bath in the composition of Example 8, for a time of 2 hours at room pressure at the temperature of 60-65°C. Figure 8 shows the result of the treatment after inclusion, cutting and standard staining with hematoxylin/eosin.

### Example 14 (Comparative Example)

### Comparison of the treatment of samples according to the invention and according to EP822403

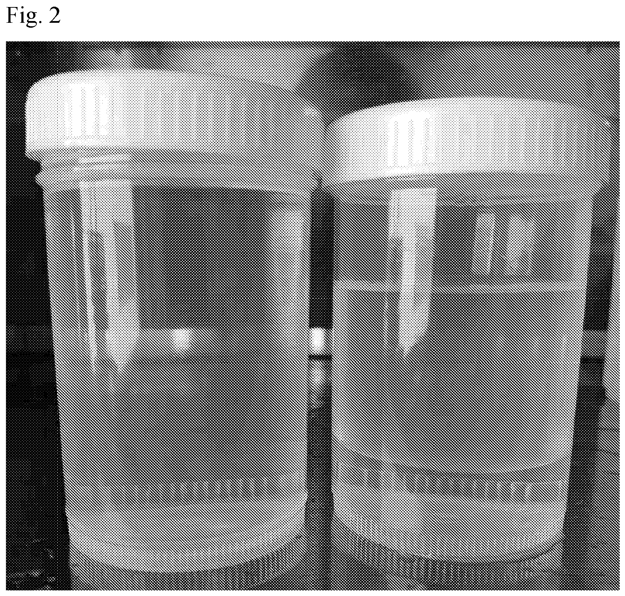

A preferred composition of EP822403 having the following percentage composition was reproduced:
ethyl alcohol/isopropyl alcohol/paraffin = 1/1/1 (vol)
(herein defined "comparative composition"), and it was attempted to process samples according to the method of the invention with such a composition. The comparative composition at the process temperature (60°C) was inhomogeneous, i.e. composed of 2 distinct phases, as shown in Figure 2.

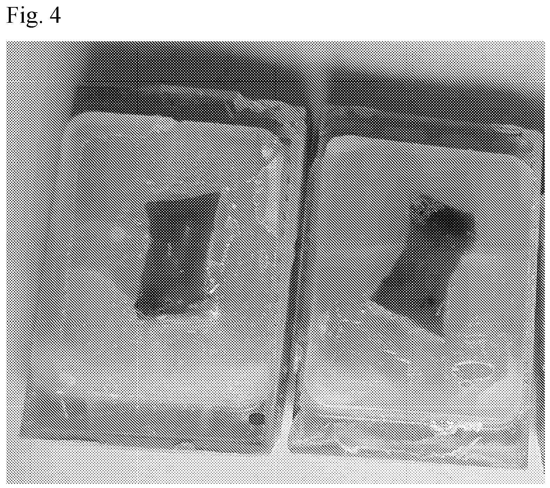

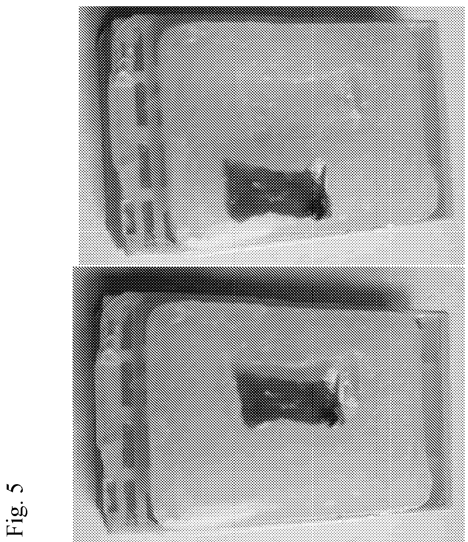

The two phases were separated, and samples were attempted to be processed with the separate phases of the comparative composition, and it was observed that, while the samples processed in the upper phase were acceptable, the samples processed in the lower phase were not cuttable when preparing the section for viewing under the microscope (see Figures 4 and 5).

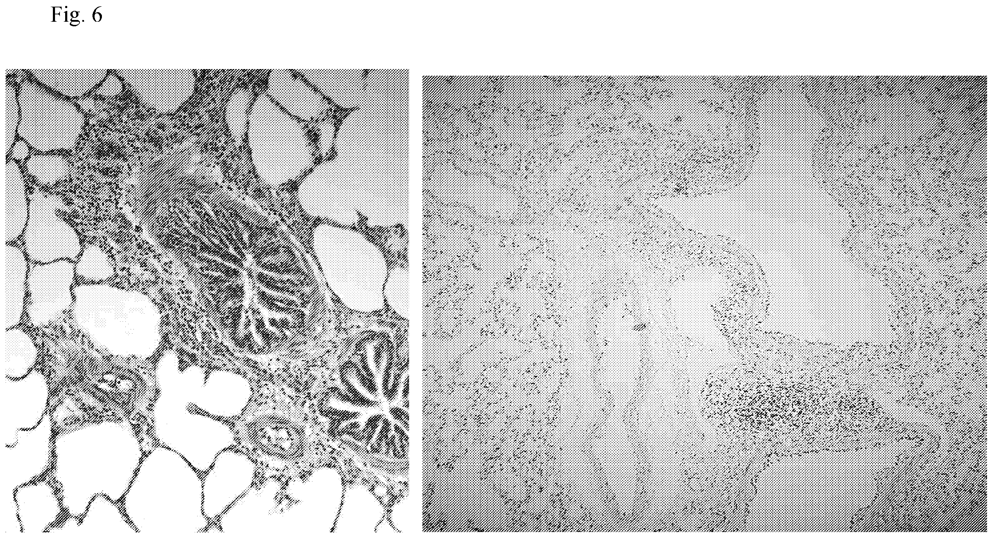

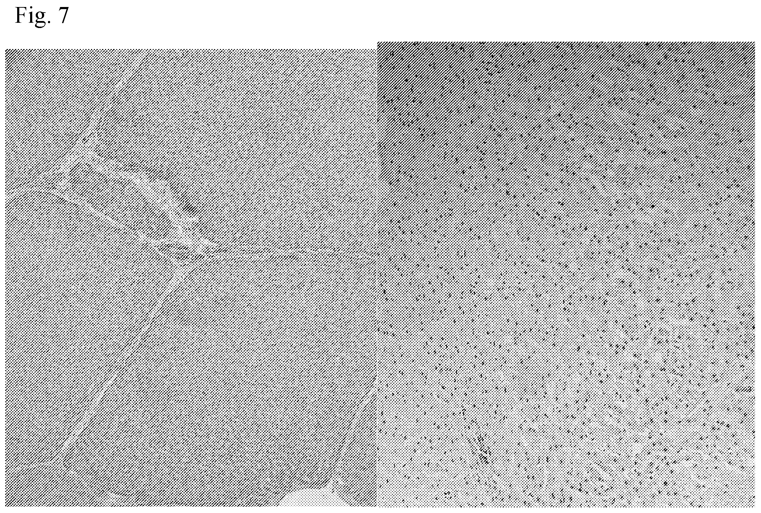

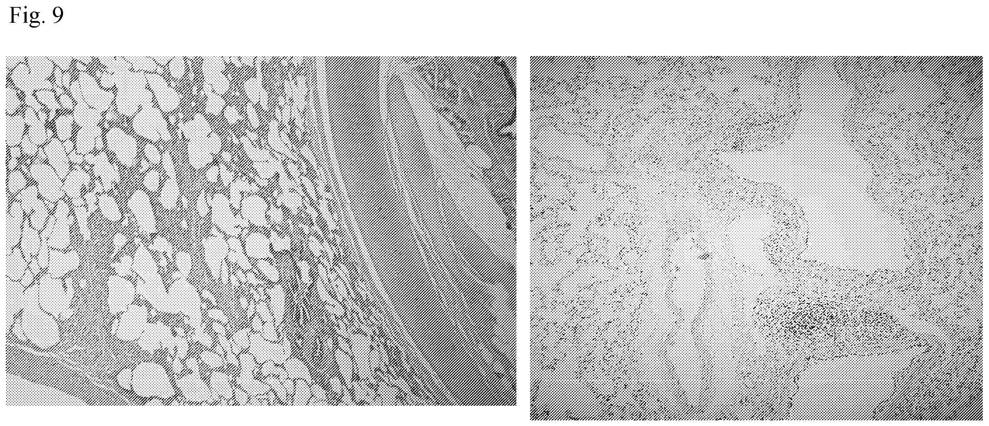

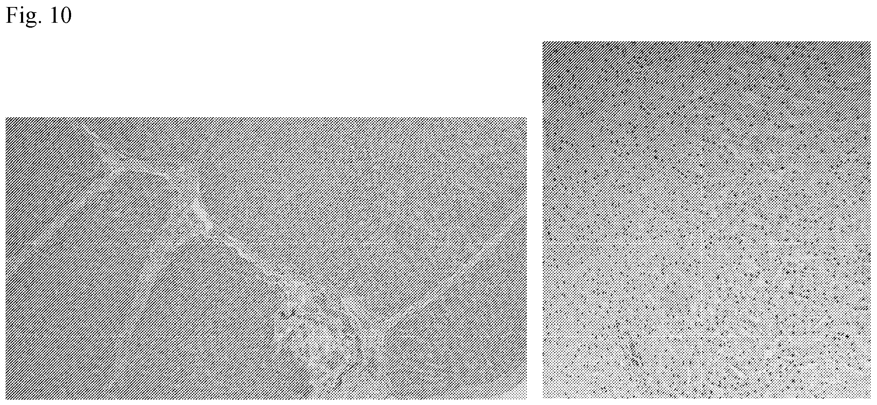

Furthermore, the processing carried out at the top of the aforesaid formulation resulted in an inhomogeneous and unsuitable staining of the slide (standard hematoxylin/eosin staining) as the cytoplasmic staining did not show sufficient contrast for the correct interpretation of the slide by the pathologist (see Figures 6, 7, 9 and 10).

The Comparative Example demonstrates that the dehydrating and clarifying compositions of the prior art are not suitable for performing the treatment according to the invention.

## Claims

1. Use of a composition comprising paraffin, at least one alcohol, preferably selected from ethyl alcohol and isopropyl alcohol, and at least one hydrocarbon selected from naphtha, octane, isoparaffin and limonene, for the analytical preparation of biological, cytological, histological and autopsical samples, **characterized in that** it does not comprise ketones.

2. Use according to claim 1, for the simultaneous performing of treatments of dehydration, clarification and infiltration in paraffin, in a single step.

3. Use according to claim 1 or 2, **characterized in that** said composition also comprises 2,2-dimethoxypropane.

4. Use of a composition as defined in any one of claims 1 to 3, **characterized in that** said naphtha is a hydrocarbon mixture derived from a petroleum fraction free of aromatic hydrocarbons and is predominantly composed of molecules having 7 to 9, carbon atoms.

5. Use of a composition as defined in any one of claims 1 to 4, **characterized in that** it comprises paraffin, ethyl alcohol and isoparaffin.

6. A composition for treating biological, cytological, histological and autopsical samples comprising, or in alternative consisting of, paraffin, at least one alcohol, preferably selected from ethyl alcohol and isopropyl alcohol, at least one hydrocarbon selected from naphtha, octane, isoparaffin and limonene, and possibly 2,2-dimethoxypropane, **characterized in that** it does not comprise ketones.

7. The composition according to claim 6, **characterized in that** it comprises, or in alternative consists of:
- paraffin (as defined above): 40-60%, preferably about 50%;
- ethyl alcohol and/or isopropyl alcohol: 15-25%, preferably about 20%; and
- at least one hydrocarbon selected from naphtha, octane, isoparaffin and limonene: 25-40%, preferably about 30%, said hydrocarbon being more preferably isoparaffin; and
- one or more further components, at the rate of 0-15%, preferably 0-5%.

8. The composition according to claim 6 or 7, **characterized in that** it comprises 43-50%, preferably 45-50% paraffin, 5% ethyl alcohol, 15% isopropyl alcohol and 30% at least one hydrocarbon selected from naphtha, octane, isoparaffin and limonene, preferably isoparaffin, one or more further components, at the rate of 0-15%, preferably 0-5%.

9. The composition according to claim 6 or 7, **characterized in that** it comprises 50% paraffin, 20% ethyl alcohol and 30% isoparaffin.

10. The composition according any one of claims 6 to 9, **characterized in that** said naphtha is a hydrocarbon mixture derived from a petroleum fraction free of aromatic hydrocarbons and is predominantly composed of molecules having 7 to 9, carbon atoms.

11. A method for dehydrating, clarifying and infiltrating biological, cytological, histological and autopsical samples in paraffin, comprising treating said samples with a composition according to any one of claims 6 to 10.

12. The method for treating biological, cytological, histological and autopsical samples, comprising performing a single treatment of dehydration, clarification and infiltration in paraffin with the composition according any one of claims 6 to 10, on a sample previously subjected to fixation.

13. The method of claim 11 for treating biological, cytological, histological and autopsical samples previously subjected to fixation, in particular for treatments of dehydration, clarification and infiltration in paraffin, comprising:
- heating a composition according to any one of claims 6 to 10to about 60-65°C;
- treating said samples with a composition according to any one of claims 6 to 10.

14. The composition according any one of claims 6 to 10, **characterized in that** it is solid at ambient pressure and temperature.

## Patentansprüche

1. Verwendung einer Zusammensetzung, enthaltend Paraffin, mindestens einen Alkohol, vorzugsweise ausgewählt aus Ethylalkohol und Isopropylalkohol, und mindestens einen Kohlenwasserstoff, ausgewählt aus Naphtha, Oktan, Isoparaffin und Limonen, für die analytische Herstellung von biologischen, zytologischen, histologischen und autopsischen Proben, **dadurch gekennzeichnet, dass** sie keine Ketone enthält.

2. Verwendung nach Anspruch 1 für die gleichzeitige Durchführung von Dehydratations-, Klärungs- und Infiltrationsbehandlungen in Paraffin in einem einzigen Schritt.

3. Verwendung nach Anspruch 1 oder 2, **dadurch gekennzeichnet, dass** die Zusammensetzung auch 2,2-Dimethoxypropan enthält.

4. Verwendung einer Zusammensetzung nach einem der Ansprüche 1 bis 3, **dadurch gekennzeichnet, dass** Naphtha eine Kohlenwasserstoffmischung ist, die aus Petroleumfraktionen frei von aromatischen Kohlenwassenstoffen abgeleitet ist und vorwiegend aus Molekülen mit 7 bis 9 Kohlenstoffatomen zusammengesetzt ist.

5. Verwendung einer Zusammensetzung nach einem der Ansprüche 1 bis 4, **dadurch gekennzeichnet, dass** sie Paraffin, Ethylalkohol und Isoparaffin enthält.

6. Eine Zusammensetzung zur Behandlung von biologischen, zytologischen, histologischen und autopsischen Proben, enthaltend oder in einer Alternative bestehend aus Paraffin, mindestens einem Alkohol, vorzugsweise ausgewählt aus Ethylalkohol und Isopropylalkohol, mindestens einem Kohlenwasserstoff, ausgewählt aus Naphtha, Oktan, Isoparaffin und Limonen, und möglicherweise 2,2-Dimethoxypropan, **dadurch gekennzeichnet, dass** sie keine Ketone enthält.

7. Die Zusammensetzung gemäß Anspruch 6, **dadurch gekennzeichnet, dass** sie enthält oder in einer Alternative besteht aus:
- Paraffin (wie oben definiert): 40 bis 60 %, vorzugsweise ungefähr 50 %;
- Ethylalkohol und/oder Isopropylalkohol: 15 bis 25 %, vorzugsweise ungefähr 20 %; und
- mindestens einen Kohlenwasserstoff, ausgewählt aus Naphtha, Oktan, Isoparaffin und Limonen: 25 bis 40 %, vorzugsweise ungefähr 30 %, wobei der Kohlenwasserstoff besonders bevorzugt Isoparaffin ist; und
- eine oder mehrere weitere Komponenten in einer Menge von 0 bis 15 %, vorzugsweise 0 bis 5 %.

8. Die Zusammensetzung gemäß Anspruch 6 oder 7, **dadurch gekennzeichnet, dass** sie 43 bis 50 %, vorzugsweise 45 bis 50 % Paraffin, 5 % Ethylalkohol, 15 % Isopropylalkohol und 30 % mindestens eines Kohlenwasserstoffs, ausgewählt aus Naphtha, Oktan, Isoparaffin und Limonen, vorzugsweise Isoparaffin, sowie eine oder mehrere weitere Komponenten in einem Anteil von 0 bis 15 %, vorzugsweise 0 bis 5 %, enthält.

9. Die Zusammensetzung nach Anspruch 6 oder 7, **dadurch gekennzeichnet, dass** sie 50 % Paraffin, 20 % Ethylalkohol und 30 % Isoparaffin enthält.

10. Die Zusammensetzung nach einem der Ansprüche 6 bis 9, **dadurch gekennzeichnet, dass** das Naphtha eine Kohlenwasserstoffmischung ist, die aus Petroleumfraktionen frei von aromatischen Kohlenwassenstoffen abgeleitet ist und vorwiegend aus Molekülen mit 7 bis 9 Kohlenstoffatomen zusammengesetzt ist.

11. Ein Verfahren zum Dehydratisieren, Klären und Infiltrieren biologischer, zytologischer, histologischer und autopsischer Proben in Paraffin, umfassend die Behandlung der Proben mit einer Zusammensetzung nach einem der Ansprüche 6 bis 10.

12. Das Verfahren zur Behandlung biologischer, zytologischer, histologischer und autopsischer Proben, umfassend die Durchführung einer einzigen Dehydratations-, Klärungs- und Infiltrationsbehandlung in Paraffin mit der Zusammensetzung nach einem der Ansprüche 6 bis 10 an einer Probe, die zuvor einer Fixierung unterzogen wurde.

13. Das Verfahren nach Anspruch 11 zur Behandlung biologischer, zytologischer, histologischer und autopsischer Proben, die zuvor einer Fixierung unterzogen wurden, insbesondere zur Dehydratation-, Klärung- und Infiltrationsbehandlungen in Paraffin, umfassend:
- Erwärmen einer erfindungsgemäßen Zusammensetzung gemäß einem der Ansprüche 6 bis 10 auf ungefähr 60 bis 65°C;
- Behandeln der Proben mit einer Zusammensetzung gemäß einem der Ansprüche 6 bis 10.

14. Die Zusammensetzung nach einem der Ansprüche 6 bis 10, **dadurch gekennzeichnet, dass** sie fest bei Raumdruck und -temperatur ist.

## Revendications

1. Utilisation d'une composition comprenant de la paraffine, au moins un alcool, de préférence choisi parmi l'alcool éthylique et l'alcool isopropylique, et au moins un hydrocarbure choisi parmi le naphte, l'octane, l'isoparaffine et le limonène, pour la préparation analytique d'échantillons biologiques, cytologiques, histologiques et autopsiques, **caractérisée en ce qu'**elle ne comprend pas de cétones.

2. Utilisation selon la revendication 1, pour la réalisation simultanée des traitements de déshydratation, de clarification et d'infiltration dans la paraffine, en une seule étape.

3. Utilisation selon la revendication 1 ou 2, **caractérisée en ce que** ladite composition comprend également du 2,2-diméthoxypropane.

4. Utilisation d'une composition telle que définie dans l'une quelconque des revendications 1 à 3, **caractérisée en ce que** ledit naphte est un mélange d'hydrocarbures dérivé d'une fraction pétrolière exempte d'hydrocarbures aromatiques et est majoritairement composé de molécules ayant de 7 à 9 atomes de carbone.

5. Utilisation d'une composition telle que définie dans l'une quelconque des revendications 1 à 4, **caractérisée en ce qu'**elle comprend de la paraffine, de l'alcool éthylique et de l'isoparaffine.

6. Composition pour le traitement d'échantillons biologiques, cytologiques, histologiques et autopsiques comprenant, ou en alternative, de la paraffine, au moins un alcool, de préférence choisi parmi l'alcool éthylique et l'alcool isopropylique, au moins un hydrocarbure choisi parmi le naphte, l'octane, l'isoparaffine et le limonène, et éventuellement le 2,2-diméthoxypropane, **caractérisée en ce qu'**elle ne comprend pas de cétones.

7. Composition selon la revendication 6, **caractérisée en ce qu'**elle comprend, ou en alternative consiste en :
- la paraffine (telle que définie ci-dessus) : 40-60%, de préférence environ 50% ;
- l'alcool éthylique et/ou l'alcool isopropylique : 15-25%, de préférence environ 20% ; et
- au moins un hydrocarbure choisi parmi le naphte, l'octane, l'isoparaffine et le limonène : 25-40%, de préférence environ 30%, ledit hydrocarbure étant plus préférentiellement l'isoparaffine ; et
- un ou plusieurs autres composants, à raison de 0 à 15%, de préférence 0 à 5%.

8. Composition selon la revendication 6 ou 7, **caractérisée en ce qu'**elle comprend 43 à 50%, de préférence 45 à 50% de paraffine, 5% d'alcool éthylique, 15% d'alcool isopropylique et 30% d'au moins un hydrocarbure choisi parmi le naphte, l'octane, l'isoparaffine et le limonène, de préférence l'isoparaffine, un ou plusieurs autres composants, à raison de 0 à 15%, de préférence 0 à 5%.

9. Composition selon la revendication 6 ou 7, **caractérisée en ce qu'**elle comprend 50 % de la paraffine, 20 % de l'alcool éthylique et 30 % de l'isoparaffine.

10. Composition selon l'une quelconque des revendications 6 à 9, **caractérisée en ce que** ledit naphte est un mélange d'hydrocarbures dérivé d'une fraction pétrolière exempte d'hydrocarbures aromatiques et est principalement composé de molécules ayant de 7 à 9 atomes de carbone.

11. Procédé de déshydratation, de clarification et d'infiltration d'échantillons biologiques, cytologiques, histologiques et autopsiques dans la paraffine, comprenant le traitement desdits échantillons avec une composition selon l'une quelconque des revendications 6 à 10.

12. Procédé de traitement d'échantillons biologiques, cytologiques, histologiques et autopsiques, comprenant la réalisation d'un seul traitement de déshydratation, de clarification et d'infiltration dans la paraffine avec la composition selon l'une quelconque des revendications 6 à 10, sur un échantillon préalablement soumis à une fixation.

13. Procédé de la revendication 11 pour le traitement d'échantillons biologiques, cytologiques, histologiques et autopsiques préalablement soumis à une fixation, en particulier pour des traitements de déshydratation, de clarification et d'infiltration dans la paraffine, comprenant les étapes consistant à :
- chauffer une composition selon l'une quelconque des revendications 6 à 10 jusqu'à environ 60-65°C ;
- traiter lesdits échantillons avec une composition selon l'une quelconque des revendications 6 à 10.

14. Composition selon l'une quelconque des revendications 6 à 10, **caractérisée en ce qu'**elle est solide à pression et température ambiantes.
